# FASCICULE DE BREVET EUROPEEN

(11) **EP 2 224 150 B1**
(45) Date de publication et mention de la délivrance du brevet: **09.05.2012**
(21) Numéro de dépôt: 10154831.1
(22) Date de dépôt: 26.02.2010
(51) Int. Cl.: F16H 7/12, H04N 1/10, F16H 7/08

(54) **Dispositif de tension de courroie et appareil de numérisation comportant un tel dispositif**
Riemenspanner und Digitalisierungsgerät mit einer solchen Vorrichtung
Belt tension device and digitisation apparatus comprising such a device

(30) Priorité: 27.02.2009 FR 0900893
(43) Date de publication de la demande: 01.09.2010
(73) Titulaire: SAGEMCOM DOCUMENTS SAS, 92500 Rueil Malmaison (FR)
(72) Inventeur: Rolland, Patrick, 92500 Rueil-Malmaison (FR)
(74) Mandataire: Lavialle, Bruno François Stéphane

(56) Documents cités:
- EP-A- 1 536 159
- US-A- 4 747 810
- US-A- 6 004 236

## Description

L'invention concerne un dispositif de tension de courroie et un appareil de numérisation à plat de document (ce type d'appareil est couramment désigné par la dénomination anglaise « flat-bed »).

Un appareil de numérisation à plat comporte généralement un bâti, un module de numérisation monté sur le bâti pour coulisser entre deux positions extrêmes le long d'une direction de numérisation, et des moyens de déplacement du module de numérisation. Les moyens de déplacement comportent une courroie enroulée autour d'une poulie motrice et d'une poulie menée qui sont montées sur le bâti de telle manière que la courroie s'étende parallèlement à la direction de numérisation. Le module de numérisation est attelé à un des brins de la courroie. La régularité et la précision du déplacement du module de numérisation participent à la qualité de la numérisation. L'appareil comprend à cette fin un dispositif de tension permettant une tension optimale de à la poulie menée via un ressort monté entre une portion du bâti et le support de cette dernière.

Il est connu un dispositif de tension comportant un coulisseau qui supporte la poulie menée et qui est reçu à coulissement entre des glissières généralement formées par des portions du bâti. Le ressort est un ressort hélicoïdal de compression qui est monté entre le coulisseau et une portion de butée du bâti. Le ressort et le coulisseau s'étendent sous la courroie et parallèlement à celle-ci. L'encombrement longitudinal et vertical du dispositif limite la course du module de numérisation qui ne peut pas passer au-dessus du dispositif de tension. En outre, les glissières sont généralement constituées par les bords d'une ouverture ménagée dans le bâti de sorte que la zone dans laquelle se déplace le module de numérisation n'est pas étanche à la poussière. Lorsque l'appareil de numérisation appartient à un ensemble multifonction incorporant également une imprimante, l'appareil de numérisation est monté sur l'imprimante qui comporte une source laser engendrant par convection des flux d'air qui risquent de transporter des poussières jusqu'au module de numérisation si des moyens d'étanchéité dédiés ne sont pas prévus.

Une autre structure de dispositif de tension comprend un levier ayant une extrémité portant la poulie menée et une extrémité opposée montée pour pivoter sur le bâti. Un ressort de torsion est monté entre le levier et le bâti pour rappeler le levier dans une position de tension optimum de la courroie. Les dispositifs de ce type sont moins encombrants que les dispositifs du type précédent. En revanche, la réalisation d'un ressort de torsion ayant des caractéristiques d'effort précises et reproductibles se révèle délicate pour la fabrication de série alors que ces caractéristiques conditionnent l'obtention de la tension souhaitée.

Il est connu du document US-A-6 004 236 un dispositif analogue à celui décrit précédemment dans lequel un ressort de traction est fixé à l'extrémité libre du levier pour remplacer le ressort de torsion. Ce dispositif est cependant plus encombrant que celui du document précédent.

Ce document (US 6004236) décrit un dispositif de tension (voir Figures 1A et 1B) de courroie (25) comportant un culbuteur (39) qui est pourvu d'un axe de pivotement (38), une portion de ce culbuteur associée à un ressort hélicoïdal (32) monté parallèlement à un plan de pivotement du culbuteur, et une autre portion en forme de chape pour recevoir une poulie de guidage (26) de la courroie, la poulie étant solidaire d'un axe de poulie (27) parallèle à l'axe de pivotement du culbuteur

Les dispositifs du type connu présentent en outre l'inconvénient de devoir être constitués de plusieurs pièces de matériaux différents. Les pièces sont assemblées les unes aux autres et leur démontage nécessite des outils. Ceci complique le recyclage et les opérations de maintenance.

Selon l'invention, on prévoit, un dispositif de tension de courroie comportant un culbuteur qui est pourvu d'un axe de pivotement et qui comporte de part et d'autre de cet axe : une portion associée à un ressort hélicoïdal monté parallèlement à un plan de pivotement du culbuteur autour de son axe et une portion en forme de chape pour recevoir une poulie de guidage de la courroie, la poulie étant solidaire d'un axe de poulie qui est parallèle à l'axe de pivotement du culbuteur et a des extrémités reçues dans des encoches ménagées dans la chape de telle manière qu'un effort sur la poulie parallèlement

à une direction de tension de la courroie maintienne les extrémités de l'axe contre un fond des encoches.

Ainsi, le ressort est décalé latéralement par rapport à la courroie et seule la portion du culbuteur formant chape s'étend sous la courroie libérant un maximum d'espace. La poulie et le culbuteur sont assemblés sans outil, la poulie étant maintenue en position par la tension de la courroie, et peuvent être fabriqués en un même matériau.

Par ailleurs, dans les dispositifs connus la poulie doit comporter des flancs pour assurer le maintien latéral de la courroie sur la poulie. La fabrication de la poulie par injection nécessite d'utiliser un moule à noyaux mobiles occasionnant des bavures sur la portée de la poulie. Ces bavures peuvent affecter la régularité du déplacement linéaire du module optique et altérer la qualité video lors de l'analyse du document.

De préférence, la chape comprend des faces internes en regard écartées l'une de l'autre d'une distance légèrement supérieure à une largeur de la poulie pour former des moyens de maintien latéral de la courroie sur la poulie.

Ainsi, la poulie peut être dépourvue de flancs de maintien latéral de la courroie, cette fonction étant assurée par les faces de la chape.

L'invention a également pour objet un appareil de numérisation à plat de documents, comportant un bâti, un module de numérisation monté sur le bâti pour coulisser entre deux positions extrêmes le long d'une direction de numérisation, et des moyens de déplacement du module de numérisation comportant une courroie à laquelle est attelé le module de numérisation et qui est enroulée autour d'une poulie motrice et d'une poulie menée. L'appareil comporte un dispositif du type précité dont le culbuteur est monté pour pivoter sur un côté du bâti et la poulie est la poulie menée.

D'autres caractéristiques et avantages de l'invention ressortiront à la lecture de la description qui suit d'un mode de réalisation particulier non limitatif de l'invention.

Il sera fait référence aux dessins annexés, parmi lesquels :

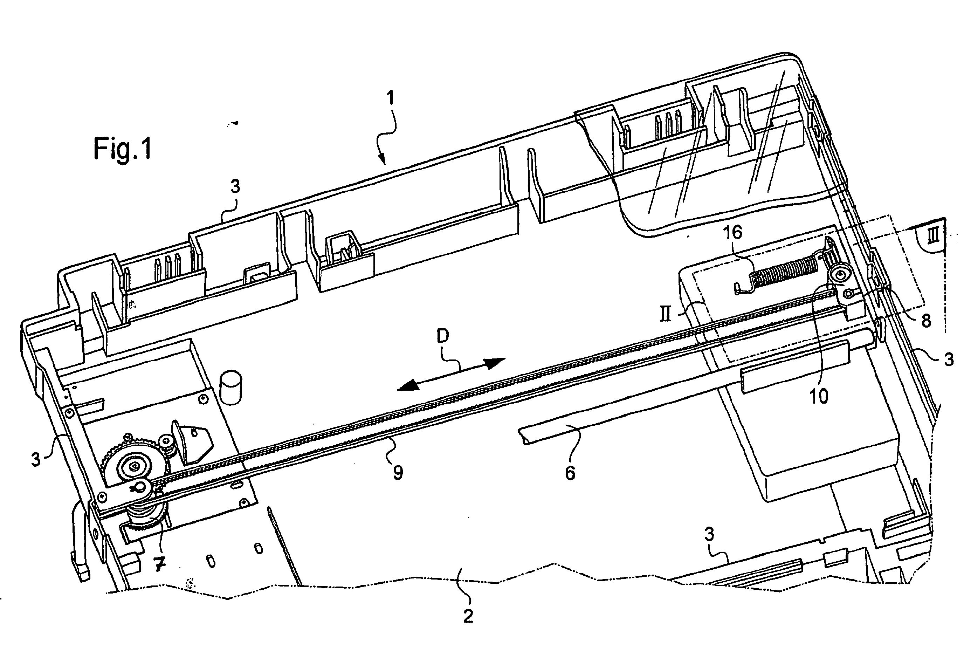

- la figure 1 est une vue partielle en perspective d'un appareil de numérisation conforme à l'invention,
- la figure 2 est une vue agrandie en perspective de la zone II de la figure 1,
- la figure 3 est une vue partielle de l'appareil, en coupe selon le plan III de la figure 1, le module de numérisation étant dans sa position extrême au-dessus du dispositif de tension,
- la figure 4 est une vue analogue à la figure 2 illustrant le montage de la poulie,
- la figure 5 est une vue en perspective du culbuteur du dispositif de tension conforme à l'invention.

En référence aux figures, l'appareil de numérisation ici décrit comprend un bâti 1 de forme parallélépipédique comportant un fond 2 ceint de parois latérales 3 destinées à supporter une vitre 4 support de document. Un capot, non visible sur les figures, est destiné à être articulé à une des parois latérales 3 du bâti 1 pour plaquer les documents peu épais contre la vitre 4. Le capot peu en outre intégrer un chargeur de feuilles à numériser.

Un module de numérisation 5 est monté entre le fond 2 et la vitre 4 pour se déplacer parallèlement à la vitre 4 le long d'une direction de numérisation D. Le module de numérisation 5 est monté pour coulisser sur une glissière 6 s'étendant parallèlement à la direction D. Une poulie motrice 7 reliée à un moteur d'entraînement par un train d'engrenages et une poulie menée 8 sont montées pour pivoter sur le fond 2. Une courroie 9 s'étend autour de la poulie motrice 7 et de la poulie menée 8 de telle manière que la courroie 9 s'étende parallèlement à la direction D. Un des brins de la courroie 9 est attaché au module de numérisation 5. Le moteur est relié à une unité de commande non représentée pour déplacer le module de numérisation 5 selon un mouvement rectiligne alternatif entre deux positions extrêmes dans lesquelles le module de numérisation 5 s'étend au voisinage de deux des parois latérales 3, opposées l'une à l'autre. L'ensemble de motorisation de la poulie motrice 7, son montage sur le bâti 1 et son mode de commande sont connus en eux-mêmes et ne sont donc pas plus détaillés ici.

La poulie menée 8 comprend un corps 8.1 ayant une surface extérieure cylindrique formant une portée pour la courroie 9 et deux portions d'axe 8.2 s'étendant en saillie axiale du corps 8.1 coaxialement à la surface extérieure cylindrique. La poulie menée 8 est solidaire d'un dispositif de tension 10 de la courroie 9.

Le dispositif de tension 10 comprend un culbuteur, généralement désigné en 11, monté sur le fond 2 par un axe 12 pour pivoter dans un plan parallèle à la vitre 4. L'axe 12 est ici une vis engagée perpendiculairement dans le fond 2. Le culbuteur 11 comporte de part et d'autre de l'axe 12 une portion d'extrémité formant une chape 13 et une portion d'extrémité formant portion de manoeuvre 14.

La chape 13 reçoit la poulie menée 8 à pivotement. A cette fin, la chape 13 comprend deux parois 13.1, 13.2, parallèles, ayant des faces internes espacées l'une de l'autre d'une distance légèrement supérieure à la largeur du corps 8.1 et pourvues chacune d'une encoche 15 recevant une des portions d'axe 8.2. La chape 13 forme ainsi un moyen de support à pivotement de la poulie 8 et un moyen de maintien latéral de la courroie 9 sur la poulie 8.

La portion de manoeuvre 14 est reliée à une extrémité d'un ressort 16, hélicoïdal et de traction, dont une extrémité opposée est accrochée au bâti 1.

Le culbuteur 11 s'étend selon une direction sensiblement perpendiculaire à la courroie 9 et parallèle à la paroi latérale 3 adjacente. Le ressort 16 s'étend parallèlement à la courroie 9 à côté de celle-ci et dans le plan de pivotement du culbuteur 11. La chape 13 a des dimensions voisines de celles de la poulie 8 parallèlement à la direction de tension de la courroie. Le ressort 16 tend à rapprocher la poulie menée 8 de la paroi latérale 3 adjacente exerçant un effort de tension de la courroie 9 selon une direction sensiblement parallèle à la courroie 9. Les encoches 15 sont orientées de telle manière que la courroie 9 sous tension exerce sur la poulie menée 8 un effort tendant à maintenir les portions d'arbre 8.2 contre le fond des encoches 15.

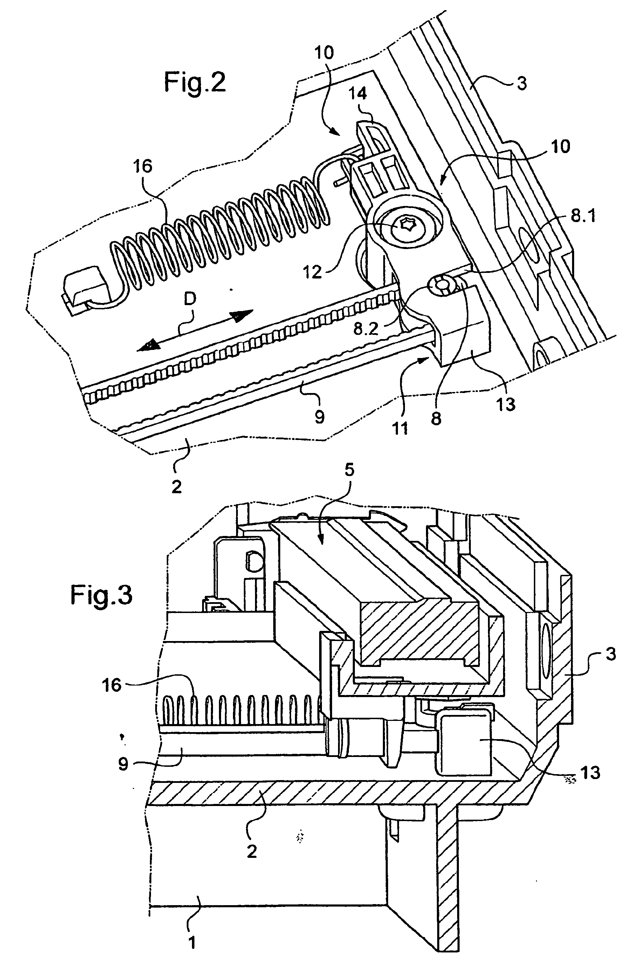

On notera que le module de numérisation s'étend au-dessus du culbuteur 11 dans une de ses positions extrêmes (voir la figure 3). Ceci permet à l'appareil d'être particulièrement compact tout en laissant au module de numérisation une course suffisante pour parcourir les documents de format standard (ici de type A4 ou A3). Ceci a pour effet de permettre une conception compacte, qui améliore l'encombrement et a un impact écologique sur les quantités de matière utilisées.

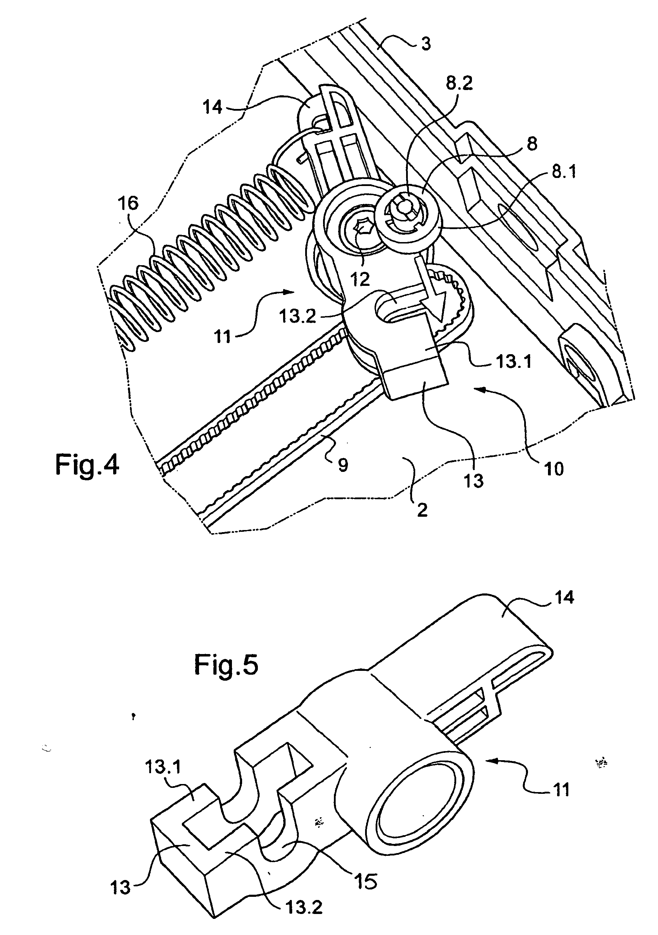

La courroie 9 peut être démontée sans outil en faisant pivoter le culbuteur 11 pour diminuer la tension de la courroie 9 jusqu'à faire sortir par coulissement les portions d'axe 8.2 des encoches 15 et dégager la poulie menée 8 d'entre les parois 13.1, 13.2. La boucle de la courroie 9 qui était montée sur la poulie menée 8 peut alors être sortie de la chape 13. Le montage est réalisé en effectuant les opérations inverses (voir la figure 4).

Le culbuteur 11 et la poulie 8 sont de préférence réalisés dans le même matériau pour en faciliter le recyclage.

Bien entendu, l'invention n'est pas limitée au mode de réalisation décrit mais englobe toutes les variantes entrant dans le champ de l'invention telle que définie par les revendications.

En particulier, bien que dans le mode de réalisation décrit la courroie comprenne deux brins parallèles, la courroie peut être enroulée autour de plus de deux poulies par exemple trois de telle manière que la courroie forme un triangle.

L'axe 12 peut être une portion du bâti 1 ou tout autre élément permettant le pivotement du culbuteur 11.

Le ressort 16 peut être un ressort de compression monté entre la portion de manoeuvre 14 et la paroi latérale 4 adjacente, cette solution ayant toutefois l'inconvénient d'accroître légèrement l'encombrement.

L'appareil peut être un simple appareil de numérisation tel qu'un scanner ou un appareil multifonction intégrant également une imprimante, ou bien encore une photocopieuse...

## Revendications

1. Dispositif de tension (10) de courroie (9) comportant un culbuteur (11) qui est pourvu d'un axe (12) de pivotement et qui comporte de part et d'autre de cet axe : une portion (14) associée à un ressort hélicoïdal (16) monté parallèlement à un plan de pivotement du culbuteur autour de son axe et une portion en forme de chape (13) pour recevoir une poulie (8) de guidage de la courroie (9), la poulie étant solidaire d'un axe de poulie (13.2) qui est parallèle à l'axe de pivotement du culbuteur
**caractérisé en ce que** l'axe de poulie (13.2) a des extrémités reçues dans des encoches (15) ménagées dans la chape (13) de telle manière qu'un effort sur - la poulie (8) parallèlement à une direction de tension de la courroie (9) maintienne les extrémités de l'axe contre un fond des encoches (15).

2. Dispositif selon la revendication 1, dans lequel la chape (13) comprend des faces internes en regard écartées l'une de l'autre d'une distance légèrement supérieure à une largeur de la poulie (8) pour former des moyens de maintien latéral de la courroie (9) sur la poulie (8).

3. Dispositif selon la revendication 1, dans lequel le ressort hélicoïdal (16) est un ressort de traction.

4. Dispositif selon la revendication 1, dans lequel la portion formant chape (13) a des dimensions voisines de celles de la poulie (8) parallèlement à la direction de tension de la courroie (9).

5. Appareil de numérisation à plat de documents, comportant un bâti (1), un module de numérisation (5) monté sur le bâti pour coulisser entre deux positions extrêmes le long d'une direction de numérisation, et des moyens de déplacement du module de numérisation comportant une courroie (9) à laquelle est attelé le module de numérisation et qui est enroulée autour d'une poulie motrice (7) et d'une poulie menée (8), **caractérisée en ce que** l'appareil comporte un dispositif (10) selon l'une quelconque des revendications précédentes dont le culbuteur (11) est monté pour pivoter sur un côté du bâti et la poulie est la poulie menée (8).

6. Appareil selon la revendication 5, dans lequel le dispositif (10) est monté sur le bâti (1) de telle manière que le module de numérisation (5) dans une de ses positions extrêmes s'étende au-dessus d'au moins une partie du dispositif.

7. Appareil selon la revendication 5, dans lequel le ressort hélicoïdal (16) du dispositif est un ressort de traction ayant une extrémité accrochée à une saillie du bâti (1).

## Claims

1. A device (10) for tensioning a belt (9), the device including a rocker (11) having a pivot pin (12) and including on either side of said pin: a portion (14) associated with a coil spring (16) mounted parallel to a plane in which the rocker pivots about its pin, and a fork-shaped portion (13) for receiving a pulley (8) for guiding the belt (9), the pulley being secured to a pulley axle (13.2) that is parallel to the pivot pin of the rocker, the device being **characterized in that** the pulley axle (13.2) has ends that are received in notches (15) formed in the fork (13) in such a manner that a force on the pulley (8) parallel to a direction for tensioning the belt (9) holds the ends of the axle against bottoms of the notches (15).

2. A device according to claim 1, wherein the fork (13) includes facing inside faces that are spaced apart from each other by a distance that is slightly greater than the width of the pulley (8) so as to form means for holding the belt (9) laterally on the pulley (8).

3. A device according to claim 1, wherein the coil spring (16) is a traction spring.

4. A device according to claim 1, wherein the fork-forming portion (13) has dimensions close to those of the pulley (8) parallel to the tensioning direction for the belt (9).

5. A flatbed document scanner appliance comprising a base (1), a scanner module (5) mounted on the base to slide between two extreme positions along a scanning direction, and means for moving the scanner module, said means comprising a belt (9) to which the scanner module is coupled and that is arranged around a drive pulley (7) and a driven pulley (8), the appliance being **characterized in that** it includes a device (10) according to any preceding claim in which the rocker (11) is mounted to pivot at one side of the base and the pulley is the driven pulley (8).

6. An appliance according to claim 5, wherein the device (10) is mounted on the base (1) in such a manner that the scanner module (5) in one of its extreme positions extends over at least a portion of the device.

7. An appliance according to claim 5, wherein the coil spring (16) of the device is a traction spring having one end attached to a projection from the base (1).

## Patentansprüche

1. Vorrichtung (10) zum Spannen eines Riemens (9), umfassend einen Schwenkhebel (11), der mit einer Schwenkachse (12) versehen ist und zu beiden Seiten dieser Achse umfasst: einen Abschnitt (14), der mit einer Schraubenfeder (16) verbunden ist, die parallel zu einer Schwenkebene des Schwenkhebels um dessen Achse gelagert ist, und einen Abschnitt in Form einer Gabel (13) zur Aufnahme einer Rolle (8) zum Führen des Riemens (9), wobei die Rolle fest mit einer Rollenachse (8.2) verbunden ist, die parallel zur Schwenkachse des Schwenkhebels ist,
**dadurch gekennzeichnet, dass** die Rollenachse (8.2) Enden hat, die in Einkerbungen (15) aufgenommen sind, die in der Gabel (13) derart ausgebildet sind, dass eine parallel zu einer Spannrichtung des Riemens (9) auf die Rolle (8) ausgeübte Kraft die Enden der Achse an einem Boden der Einkerbungen (15) hält.

2. Vorrichtung nach Anspruch 1, wobei die Gabel (13) gegenüberliegende Innenflächen umfasst, die zueinander um einen Abstand beabstandet sind, der etwas größer als eine Breite der Rolle (8) ist, um seitliche Haltemittel zum Halten des Riemens (9) an der Rolle (8) zu bilden.

3. Vorrichtung nach Anspruch 1, wobei die Schraubenfeder (16) eine Zugfeder ist.

4. Vorrichtung nach Anspruch 1, wobei der die Gabel (13) bildende Abschnitt parallel zur Spannrichtung des Riemens (9) Abmessungen hat, die ähnlich denen der Rolle (8) sind.

5. Flachbett-Dokumenten-Scangerät, umfassend einen Rahmen (1), ein Digitalisierungsmodul (5), das an dem Rahmen entlang einer Digitalisierungsrichtung zwischen zwei Endpositionen verschiebbar gelagert ist, sowie Mittel zum Verschieben des Digitalisierungsmoduls, die einen Riemen (9) umfassen, an dem das Digitalisierungsmodul befestigt ist und der um eine Antriebsrolle (7) und um eine getriebene Rolle (8) gewickelt ist, **dadurch gekennzeichnet, dass** das Gerät eine Vorrichtung (10) nach einem der vorhergehenden Ansprüche umfasst, deren Schwenkhebel (11) schwenkbar an einer Seite des Rahmens gelagert und deren Rolle die getriebene Rolle (8) ist.

6. Gerät nach Anspruch 5, wobei die Vorrichtung (10) derart an dem Rahmen (1) gelagert ist, dass sich das Digitalisierungsmodul (5) in einer seiner Endpositionen über mindestens einen Teil der Vorrichtung erstreckt.

7. Gerät nach Anspruch 5, wobei die Schraubenfeder (16) der Vorrichtung eine Zugfeder mit einem an einem Vorsprung des Rahmens (1) befestigten Ende ist.
